Europäisches Patentamt

(19) European Patent Office

Office européen des brevets

(11) Numéro de publication: **0 133 712**
**B1**

(12) **FASCICULE DE BREVET EUROPEEN**

(45) Date de publication du fascicule du brevet:
26.08.87

(21) Numéro de dépôt: **84200619.9**

(22) Date de dépôt: **19.01.81**

(60) Numéro de publication de la demande initiale en application
de l'article 76 CBE: **0033263**

(51) Int. Cl.⁴: **G 21 C 3/34**

(54) **Grille entretoise pour assemblage combustible de réacteur nucléaire.**

(30) Priorité: **22.01.80 FR 8001304**

(43) Date de publication de la demande:
**06.03.85 Bulletin 85/10**

(45) Mention de la délivrance du brevet:
**26.08.87 Bulletin 87/35**

(84) Etats contractants désignés:
**BE CH DE FR GB IT LI NL SE**

(56) Documents cités:
**CH - A - 499 850**
**FR - A - 1 436 977**
**FR - A - 1 536 257**
**FR - A - 2 099 595**
**FR - A - 2 235 464**

(73) Titulaire: **COMMISSARIAT A L'ENERGIE ATOMIQUE
Etablissement de Caractère Scientifique Technique et
Industriel, 31/33, rue de la Fédération, F-75015 Paris
(FR)**
Titulaire: **FRAMATOME ET CIE., Tour Fiat 1, Place de la
Coupole, F-92400 Courbevoie (FR)**

(72) Inventeur: **Leclerc, Joseph, 30 route de champagne,
F-69370 St Didier (FR)**
Inventeur: **Le Pargneux, Jacques, 125 rue Duguesclin,
F-69006 Lyon (FR)**
Inventeur: **Feutrel, Claude, 105, Grande rue,
F-91430 Vauhallan (FR)**
Inventeur: **Lestiboudois, Guy, 5 rue Rouget de Lisle,
F-75001 Paris (FR)**
Inventeur: **Chantant, Michel, 13 rue Jean Mermoz,
F-78390 Bois D'Arcy (FR)**

(74) Mandataire: **Mongrédien, André et al, c/o
BREVATOME 25, rue de Ponthieu, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit
être formée par écrit et motivée. Elle n'est réputée formée qu'après paiement de la taxe d'opposition (Art. 99(1) Convention sur le
brevet européen).

ACTORUM AG

# Description

La présente invention concerne une grille entretoise pour un assemblage combustible utilisé dans un réacteur nucléaire constituée par des plaquettes entrecroisées suivant un réseau à mailles carrées.

Les assemblages combustibles des réacteurs nucléaires, en particulier des réacteurs nucléaires à eau légère, sont généralement constitués par un faisceau de crayons combustibles, c'est-à-dire de tubes en matériau absorbant peu les neutrons remplis par des pastilles de matière fissile, le faisceau étant assemblé grâce à des pièces disposées à chacune des extrémités de l'assemblage. Pour le maintien transversal des crayons combustibles dans le faisceau, on utilise généralement des grilles entretoises constituées par des plaquettes entrecroisées suivant un réseau à mailles carrées, les crayons combustibles passant dans les cellules de la grille. De cette façon, les crayons ont une disposition régulière dans les directions transversales imposées par la grille. Certains des emplacements ménagés par les grilles entretoises, pour les crayons combustibles, sont occupés par des tubes guides qui sont reliés à leurs extrémités aux plaques de l'assemblage pour assurer la cohésion de celui-ci. Chaque cellule définie à l'intérieur des grilles entretoises reçoit soit un crayon combustible, soit un tube guide, soit un tube permettant le passage de l'instrumentation du cœur de réacteur. Le brevet français FR-A-1536257 résume assez bien cet état connu de la technique.

Pour assurer le maintien transversal des crayons combustibles, à l'intérieur des cellules des grilles entretoises, il est nécessaire d'exercer sur ces crayons des forces transversales et pour cela de prévoir des dispositifs portés par les parois des cellules de la grille s'étendant vers l'intérieur de la cellule, ces cellules étant d'une dimension telle qu'un jeu important est ménagé entre le crayon et les parois de la cellule. Ce jeu important est en effet nécessaire pour permettre l'écoulement du réfrigérant et faciliter le montage de l'assemblage.

Les dispositifs de maintien du crayon à l'intérieur des cellules de la grille doivent en particulier permettre un encastrement semi-rigide suffisant des crayons dans les cellules de la grille pour éviter des déplacements et des déformations des crayons de trop grande amplitude ainsi qu'un fléchissement exagéré sous l'effet des déformations d'origine thermique et d'irradiation. Les déformations d'origine thermique sont généralement occasionnées par les gradients de température entre tubes guides, tubes guides et crayons et crayons entre eux, les déformations dues à l'effet d'irradiation résultent d'une certaine dispersion dans les allongements dus principalement aux gradients de flux et aux gradients de contrainte. En effet, si la structure de l'assemblage est trop fortement perturbée en service dans le réacteur, la circulation du fluide caloporteur du réacteur risque d'être modifiée et une certaine dissymétrie de cet écoulement peut être introduite localement, si bien que les conditions d'exploitation du réacteur s'écartent des conditions optimales. D'autre part, il faut éviter un encastrement semi-rigide du crayon mettant en œuvre des forces de serrage trop importantes sur la gaine tubulaire du crayon, des contraintes excessives d'appui sur cette gaine ainsi que des contraintes axiales dans cette gaine produites par les dilatations thermiques différentielles risquant de la détruire au niveau de l'encastrement semi-rigide.

Il faut éviter également un mode de fixation des crayons dans les cellules de la grille qui risque d'introduire une usure exagérée de la gaine de ce crayon sous l'effet des vibrations auxquelles est soumis l'assemblage en service en exerçant dans ce cas une force de serrage relativement importante permettant d'assurer le meilleur moment l'encastrement semi-rigide.

On a donc proposé des dispositifs de maintien des crayons combustibles dans les cellules de grilles entretoises qui avaient pour but de fournir un compromis acceptable entre ces exigences contradictoires.

On a par exemple proposé de réaliser les grilles entretoises en un alliage élastique tel qu'un alliage de nickel ou un acier inoxydable, des ressorts et des butées rigides étant obtenus par découpage et repoussage de certaines portions de plaquettes constituant la grille pour la constitution des dispositifs de retenue des crayons.

Une telle solution présente l'inconvénient d'introduire dans l'assemblage, des grilles d'un volume relativement important en un matériau absorbant fortement les neutrons.

On a proposé également de réaliser les plaquettes constituant les cellules de la grille en un matériau absorbant faiblement les neutrons tel qu'un alliage de zirconium, des éléments de maintien des crayons combustibles étant rapportés sur ces grilles en alliage de zirconium. Ces éléments de maintien peuvent être constitués par des ressorts en alliage élastique et par des butées rigides disposés sur les plaquettes constituant les différentes parois des cellules de la grille, de façon que dans chaque cellule les ressorts soient sur des faces opposées aux faces de ces cellules sur lesquelles sont disposées les butées rigides.

Pour réaliser cette répartition des ressorts et des butées rigides rapportés sur les plaquettes de la grille, on a proposé d'utiliser des ressorts comportant deux parties actives de part et d'autre de la paroi sur laquelle est disposé le ressort pour permettre l'action du ressort sur deux crayons différents à l'intérieur de deux cellules adjacentes. De tels ressorts peuvent, par exemple, être constitués par une lame en matériau élastique entourant la plaquette et refermée sur elle-même.

Dans chaque cellule d'une telle réalisation connue à cellules d'un type unique, on associe à deux des parois de la cellule des ressorts doubles et au deux autres parois des butées rigides. Cependant, de tels dispositifs ne permettent pas d'équiper entièrement une grille comportant un nombre impair de cellules sur chacun de ses côtés et ne permet pas non plus de tenir compte des perturbations apportées, dans la répartition des ressorts équipant les cellules renfermant les crayons combustibles, par des tubes guides disposés dans le réseau dont le mode de fixation sur la cellule est rigide.

L'invention a pour objet une grille entretoise d'un assemblage combustible de réacteur nucléaire à eau légère sous pression constituée par des plaquettes entretoisées suivant un réseau à mailles carrées, dans les cellules de laquelle passent les crayons combustibles pour leur maintien transversal; ces crayons constituent un faisceau où certains crayons sont remplacés par des tubes guides, assurant, d'une part, la tenue mécanique de l'assemblage et, d'autre part, le guidage des crayons de contrôle de la réactivité, les plaquettes qui constituent les parois des cellules portant des éléments de maintien des crayons combustibles en saillie vers l'intérieur des cellules et de deux types, à savoir d'une part des butées rigides, d'autre part des ressorts susceptibles d'exercer des forces transversales sur les crayons combustibles, rapportés sur la grille et disposés autour des plaquettes de façon que chacune des faces de chaque cellule renfermant un crayon porte un élément de type différent de celui porté par la face opposée, cette grille devant permettre un maintien efficace des crayons sans conduire à une détérioration des gaines de ces crayons. Selon l'invention, la répartition adéquate des ressorts et des butées rigides est obtenue malgré la présence de tubes guides et un nombre impair de cellules sur chacun des côtés de la grille tout en évitant l'utilisation de trop nombreux éléments de maintien associés aux parois de la grille et une quantité trop importante de matériau absorbant les neutrons par la constitution de ces éléments de maintien.

Dans ce but, la grille entretoise suivant l'invention comporte:

sur la plus grande partie des parois équipées de ressorts, des ressorts doubles, c'est-à-dire entrant en contact avec deux crayons situés de part et d'autre de la paroi sur laquelle est placé le ressort double, permettant l'action symétrique de ce ressort sur deux crayons différents à l'intérieur de deux cellules adjacentes,

sur les autres parois équipées de ressort et/ou de butées rigides, des ressorts simples comportant une seule partie active disposée dans l'une des deux cellules séparées par la paroi sur laquelle est placé le ressort qui est solidaire de butées rigides entrant en contact avec le crayon combustible traversant la cellule située de l'autre côté de ladite paroi,

les dites butées rigides étant constituées par des pièces rapportées,

sur les parois de cellules équipées d'un côté par des ressorts simples et de l'autre côté par des butées rigides un ressort à deux saillies et trois butées rigides rapportées fixées à la paroi grâce à deux talons d'extrémité soudés et à une plaque coulissante médiane également soudée, logés chacun dans l'une des trois découpures rectangulaires pratiquées en alignement sur la paroi, et à deux orifices d'encastrement semi rigides disposés au voisinage des talons, de façon que l'équilibrage des forces de poussée transversales s'exerçant de chaque côté de la paroi ait lieu directement par l'intermédiaire des talons d'extrémité et de la plaque coulissante médiane, sans sollicitation de la paroi en flexion, l'équilibrage des poussées longitudinales sur les deux saillies s'effectuant par glissement de la plaque coulissante médiane montée à cet effet avec un jeu longitudinal dans sa découpe, et la fixation des talons d'extrémité dans leur découpure respective étant obtenue à l'aide de rebords pliés des talons enserrant la paroi.

Dans une variante, la grille entretoise précédente, se caractérise en ce que les parois de cellules équipées de butées rigides sur leur deux faces, comportent une paire de butées rigides dos à dos à chaque extrémité, chaque butée rigide étant de forme ovoïde obtenue par formage à froid d'un ruban d'inconel chaque paire de butées rigides étant rapportée et fixée à la paroi par l'intermédiaire de deux talons soudés, monté chacun avec un jeu longitudinal dans une découpure rectangulaire de la paroi, à laquelle ils sont fixés par des rebords pliés enserrant la plaque.

Dans une autre variante, la grille entretoise se caractérise en ce que les parois des cellules équipées de ressorts doubles ont deux paires de ressorts de chaque côté de la paroi constituées de deux rubans continus d'inconel soudés l'un à l'autre en trois zones à travers trois découpes rectangulaires alignées dans la paroi, à savoir deux zones extrêmes ou talons fixés par des bords repliés à la paroi et une zone centrale ou plaquette coulissante médiane montée avec un jeu longitudinal dans sa découpe correspondante.

Dans une réalisation intéressante, la paroi externe d'une cellule contenant un tube guide est équipée d'une butée rigide rapportée formée dans un ruban serti à ses deux extrémités dans une fente pratiquée à cet effet dans ladite paroi. Pour favoriser, en outre, le guidage des plaquettes formant les parois des cellules lors de l'assemblage, lesdites plaquettes peuvent être munies de crevés possédant un profil chanfreiné dans le sens de l'introduction desdites plaquettes.

Afin de bien faire comprendre l'invention, on va maintenant décrire à titre d'exemple non limitatif en se reportant aux figures jointes en annexe un mode de réalisation d'une grille entretoise suivant l'invention, dans le cas d'assemblages combustibles pour un réacteur nucléaire à eau légère et les éléments de maintien transversal des crayons combustibles équipant cette grille.

La fig. 1 représente une vue de dessus de la grille entretoise;

les fig. 2a et 2b expliquent un détail du montage des différentes plaquettes constituant les parois des cellules;

les fig. 3a, 3b, 3c représentent une réalisation de parois de cellule du type ressort-ressort;

les fig. 4a, 4b, 4c représentent une réalisation de parois de cellule du type ressort-butée rigide;

les fig. 5a, 5b, 5c représentent une réalisation de parois de cellule du type butée rigide-butée rigide;

la fig. 6 représente une réalisation de paroi de cellule du type tube guide-butée rigide.

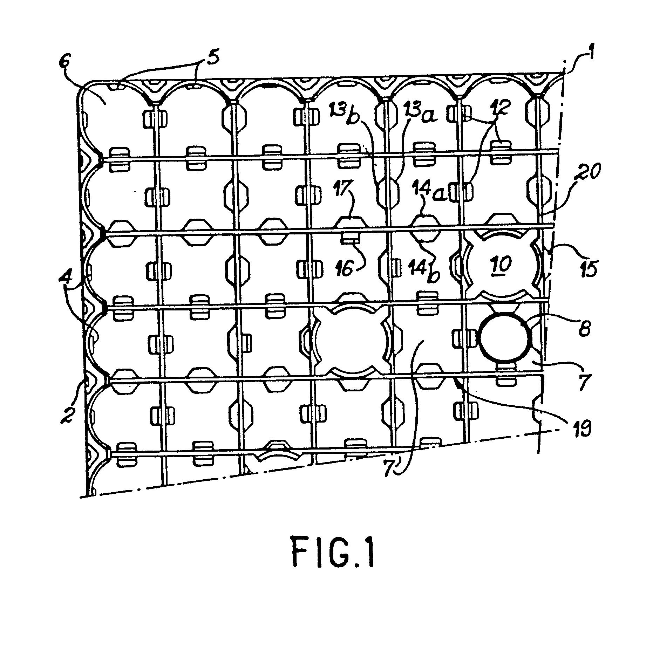

Sur la fig. 1, on voit une portion d'une grille pour assemblages combustibles d'un réacteur nucléaire à eau légère au voisinage d'un angle de cette grille. La grille dans son ensemble comporte dix-sept cellules suivant chacun des côtés de la grille. La grille est limitée à sa périphérie par des parois telles que 1 et 2 constituées par une plaquette de grande longueur portant des découpes pour la constitution de raidisseurs.

Les parois externes de la grille portent également des butées rigides telles que 4 et 5 au niveau de chacune des cellules, sur une paroi en ce qui concerne les cellules des côtés et sur deux parois en ce qui concerne la cellule d'angle 6.

La grille telle que représentée à la fig. 1 comporte des cellules 7 pour les éléments combustibles tels que 8 et des cellules 10 pour les tubes guides.

La plus grande partie des cellules 7 dans lesquelles passent les éléments combustibles 8 ont deux parois équipées de ressorts doubles 12 disposés successivement sur le périmètre de la cellule, les deux parois opposées à des parois équipées de ressorts doubles 12 comportant des doubles butées rigides 13 et 14, les butées rigides 13a et 13b et les butées rigides 14a et 14b respectivement situées sur l'une et l'autre parois étant dirigées vers l'intérieur de la cellule et vers l'intérieur de la cellule adjacente disposée de l'autre côté de la paroi considérée.

Les plaquettes des cellules 10 réservées pour le passage des tubes guides ne comportent pas de ressort sur leur paroi mais uniquement des butées rigides 15 dirigées vers les cellules adjacentes et des moyens de liaison vers l'intérieur de la cellule où passe le tube guide pour la fixation rigide de ce tube guide à l'intérieur de la cellule.

Dans un assemblage 17×17, c'est-à-dire un assemblage comportant dix-sept cellules sur chacun des côtés de la grille, sont disposés vingt-quatre guides qui nécessitent évidemment vingt-quatre cellules telles que les cellules 10.

Cette présence de cellules 10 dont les parois ne comportent pas de ressort, introduit une perturbation dans le réseau des éléments de maintien des crayons combustibles, si bien qu'il est nécessaire de disposer à certains endroits des ressorts simples 16 comportant une seule face active dans l'une des cellules, la cellule adjacente comportant sur la paroi où se trouve le ressort simple une butée rigide 17 ménagée sur la paroi considérée indépendamment du ressort 16.

De la même façon, des ressorts simples 16 sont nécessaires pour tenir compte des perturbations dans la répartition des éléments de maintien transversal causées par le fait que le nombre de cellules sur les côtés de la grille est un nombre impair et que les parois externes de cette grille ne portent que des butées rigides telles que 4 et 5.

Compte tenu des dissymétries inévitables de l'ensemble de la grille dues à la présence des tubes guides, on voit donc que l'ensemble des cellules de celle-ci est réalisé en associant quatre types de parois différentes, à savoir:

— les parois équipées de ressorts sur leurs deux faces;

— les parois équipées de butées rigides sur leurs deux faces;

— les parois mixtes équipées d'un côté de ressorts et de l'autre de butées rigides;

— les parois des cellules de tubes guides équipées de butées rigides sur la face non en contact avec le tube guide.

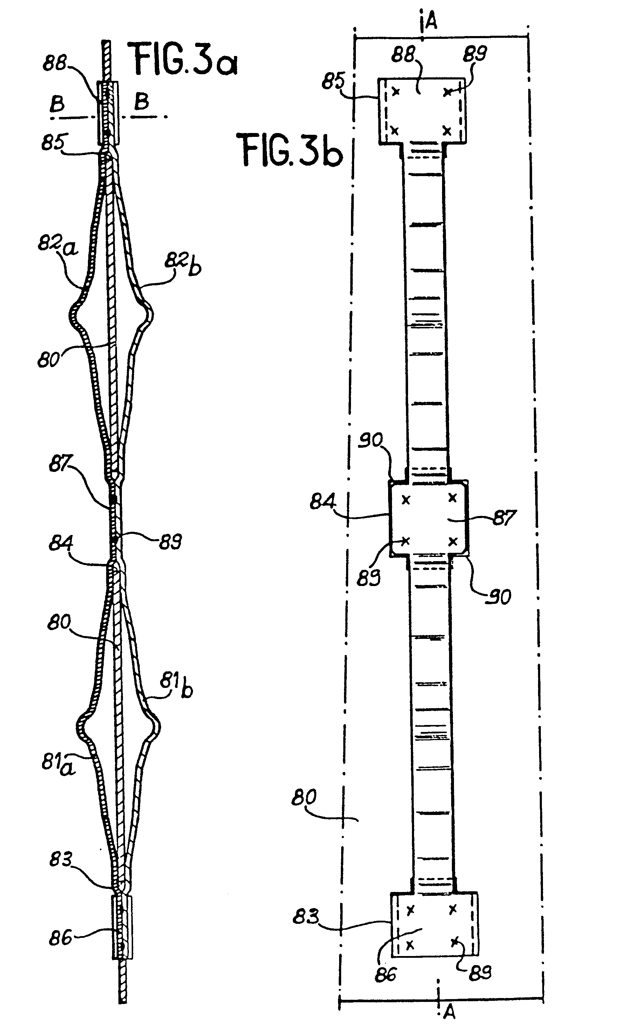

La grille représentée à la fig. 1 est constituée par des plaquettes entrecroisées à angle droit 19 et 20, une telle plaquette étant également représentée à la fig. 2.

L'assemblage de la grille se fait par assemblage à mi-fer des plaquettes introduites réciproquement dans des fentes de manière à définir les cellules de la grille. Ces plaquettes entrecroisées sont solidarisées entre elles après montage par une soudure effectuée à chaque angle inférieur et supérieur de la cellule définie.

Lors de l'entrecroisement des plaquettes les bords des fentes sont guidés et positionnés par des crevés 26 obtenus par découpage et repoussage de la plaquette et représentés aux fig. 2a et 2b.

Les crevés 26 assurent dans une première fonction le guidage des plaquettes lors du montage de ces plaquettes. Afin de faciliter ce guidage, les crevés 26 présentent un profil chanfreiné obtenu directement lors de la découpe de la plaquette.

Les fig. 2a et 2b montrent une réalisation de ce guidage obtenue par une prédécoupe de la plaquette en forme de trou de serrure (26-1) qui après formage des crevés présente un profil chanfreiné dans le sens de l'introduction des plaquettes.

On va décrire maintenant, en se référant aux fig. 3 à 6, des modes de réalisation possibles des appuis réalisés dans des parois de cellules de grilles pour éléments combustibles.

Dans tous ces modes de réalisation, la caractéristique essentielle et originale réside dans le fait que l'ensemble des ressorts et butées rigides sont rapportés et réalisés séparément les uns des autres dans un alliage nickel avant d'être assemblés par soudure sur les parois des cellules qui portent des découpes prévues à cet effet. Ce système permet la limitation de l'allongement axial des ressorts lors de leur glissement le long des plaquettes de la cellule et la reprise des efforts sur les parties formant ressort que la paroi comporte un ressort double, ou un ressort simple coopérant avec une butée rigide sur l'autre face.

Dans les modes de réalisation qui vont être décrits, les parois de cellules comportent uniquement des découpes qui sont faites à la machine sans emboutissage et permettent par conséquent l'emploi d'un matériau plus résistant et moins ductile. Les pièces d'appui sont rapportées sur la plaquette constituant la paroi et comme elles sont généralement réalisées en matériau absorbant fortement les neutrons, on s'est limité strictement à la quantité nécessaire de matériau pour réaliser les différents ressorts et butées rigides ainsi qu'il ressortira de la description qui va suivre.

Sur les fig. 3 on a représenté en 80 la paroi d'une cellule équipée de part et d'autre de deux ressorts doubles 81, 82a et 81b et 82b. La fig. 3a est une coupe selon A–A de la fig. 3b, laquelle est une vue de dessus de la fig. 3a. La plaquette 80 comporte trois découpes rectangulaires 83, 84 et 85 situés respectivement près des bords supérieur et inférieur et au centre de cette plaquette. Dans chacune de ces découpes 83, 84 et 85 se trouve un talon de contact, à savoir respectivement 86, 87 et 88 par l'intermédiaire desquels les deux ressorts précédents sont en contact soudés l'un à l'autre et enserrent par là même la plaquette 80. A cet effet, un certain nombre de points de soudure tels que 89 sont prévus sur chaque talon. Le talon coulissant central 87 comporte un jeu longitudinal 90 dans son logement 84, ce qui permet de réaliser ainsi une fixation coulissante et sans contact longitudinal pour le talon central 87. Ce jeu est très important, car il permet l'équilibrage des réactions des différents ressorts sur les crayons combustibles non représentés par déplacement longitudinal de l'ensemble des pièces 81 et 82 rapportées sur la plaquette 80. Aux extrémités des ressorts 81 et 82, la butée s'établit par compression dans le plan de la plaquette 80 sur la section des logements de talon 86 et 88 dans la plaquette elle-même.

Enfin, la fig. 3c qui est une coupe de la fig. 3a selon B–B à l'extrémité supérieure permet de voir comment les rebords 91 et 92 du talon 88 permettent en enserrant la plaquette 80 dans les rebords 91 et 92 d'éviter l'échappement du talon 88 au travers de la découpe 85 dans la tôle 80. Il en est de même du talon 86 situé à la partie inférieure.

Ainsi qu'on peut le vérifier sur les différentes fig. 3, les seuls efforts que peut subir la plaquette 80 en fonctionnement sont contenus dans son plan à l'exclusion de tout moment de flexion qui pourrait en provoquer la déformation inadmissible. En effet, les efforts exercés de part et d'autre sur les ressorts 81 et 82 s'équilibrent et sont reportés au niveau des talons 86, 87 et 88 où ils se compensent deux par deux et face à face.

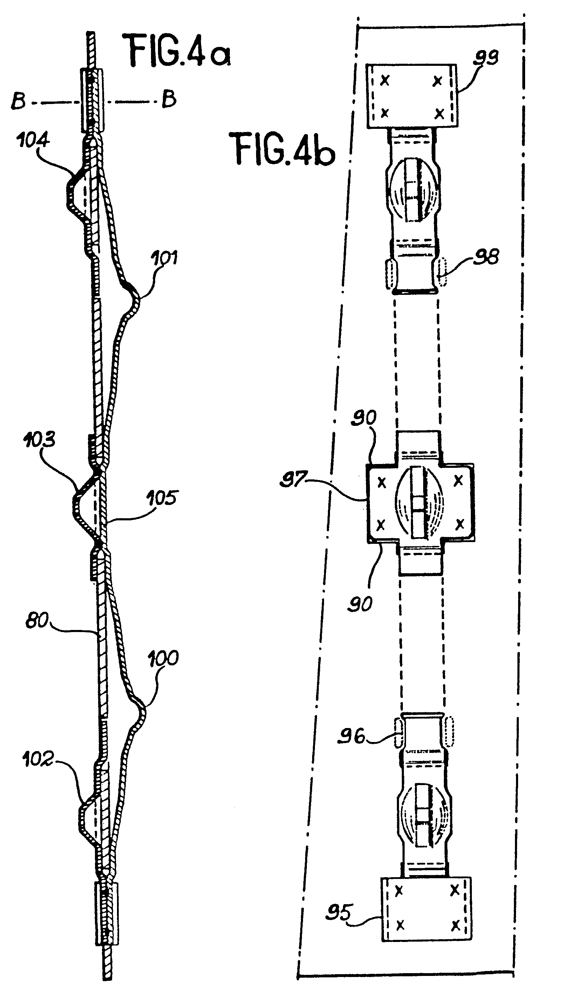

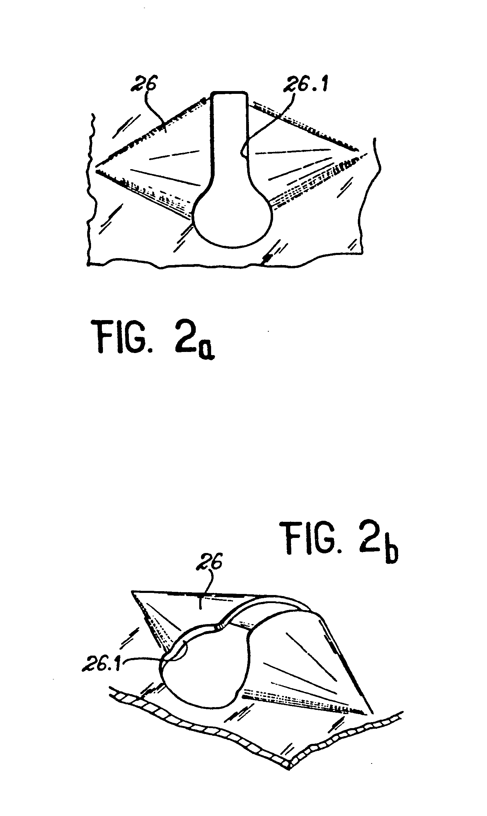

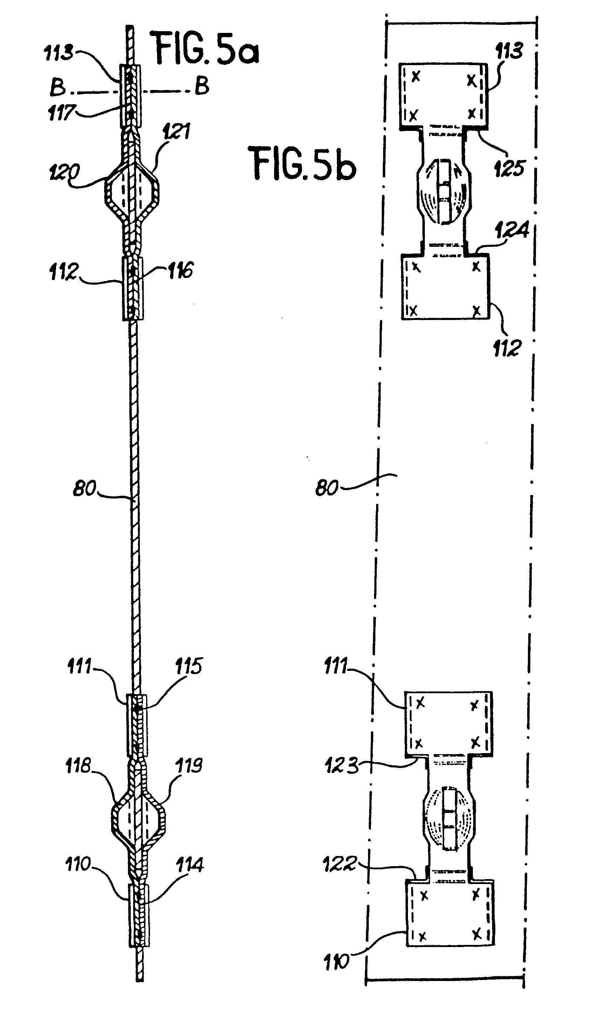

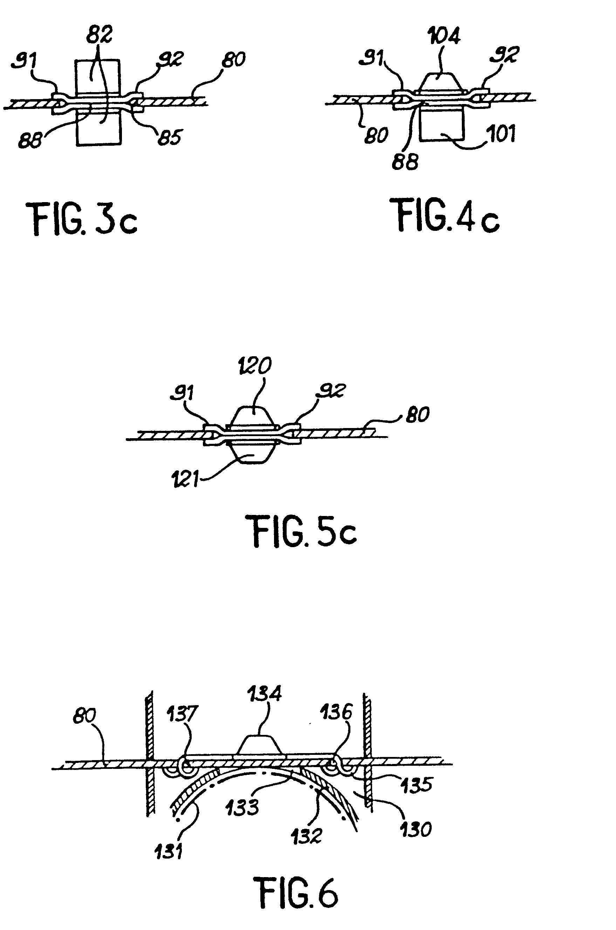

Sur les différentes fig. 4, on a représenté en coupe élévation vue de dessus et debout, la réalisation d'une paroi comportant sur une face deux ressorts et sur la face opposée trois butées rigides. La plaquette 80 comporte dans cet exemple cinq découpes respectivement référencées 95, 96, 97, 98 et 99. Les pièces rapportées comportent d'un côté les ressorts 100 et 101 et de l'autre côté, les butées rigides 102, 103 et 104. Le mode d'implantation sur la plaquette 80 des pièces rapportées précédentes est de même nature que celui du mode de réalisation de la fig. 3 en ce qui concerne les extrémités et le centre. La jonction centrale constituée d'une butée rigide 103 et de la zone de raccordement 105 entre les deux ressorts 100 et 101 est montée coulissante avec deux jeux longitudinaux 90 dans la découpe 97 de la plaque 80 de façon à former un talon centrale glissant. Comme dans la réalisation précédente de la fig. 3, on voit sur la fig. 4c qui est une coupe de la fig. 4a selon B–B les rebords 91 et 92 du talon d'extrémité permettant d'éviter le passage dudit talon au travers de la découpe 95 ou 99 correspondante.

Dans ce mode de réalisation, les butées rigides extrêmes 102 et 104 ont leur extrémité opposée aux orifices 95 et 99 encastrée dans les découpes 96 et 98 par sertissage dans les rebords de la plaque 80. Il est également très avantageux de réaliser les trois butées rigides 102, 103 et 104 en leur donnant une forme ovoïde qui facilite grandement l'écoulement de l'eau et évite en fonctionnement les phénomènes très désagréables de cavitation. Des butées rigides ainsi mises en forme peuvent être facilement obtenues par emboutissage à froid.

Comme dans l'exemple des fig. 3, on voit facilement que l'équilibrage des réactions intervenant de part et d'autre de la paroi 80 se fait face à face au niveau des soudures sans introduire aucun couple de flexion sur la plaquette 80, laquelle n'est sollicitée qu'à ses extrémités par des efforts contenus dans son plan.

On décrira maintenant en se référant aux fig. 5a, 5b et 5c le mode de réalisation d'une plaquette de cellule 80 équipée de part et d'autre de deux butées rigides de forme ovoïde.

Dans ce mode de réalisation, la plaquette 80 comporte quatre découpes rectangulaires 110, 111 à l'une de ses extrémités et 112, 113 à l'autre extrémité dans lesquelles viennent se souder les talons 114, 115, 116 et 117 des deux plaques dans lesquelles sont formées de part et d'autre les butées rigides ovoïdes 118, 119, 120 et 121. Les quatre talons 114, 115, 116 et 117 sont maintenus en place sur la paroi 80 par les rebords 91 et 92 comparables à ceux des fig. 3c et 4c. On voit ceci très nettement sur la fig. 5c qui est une coupe selon B–B de la fig. 5a au niveau de l'un des talons 114, 115, 116 ou 117. Des jeux 122 et 123 d'une part et 124 et 125 d'autre part sont prévus dans le sens longitudinal entre les talons 114, 115 d'une part et 116, 117 d'autre part et les découpes correspondantes 110, 111, 112 et 113 de façon à permettre l'équilibrage des efforts exercés transversalement sur les butées rigides correspondantes. Sur la réalisation illustrée par les fig. 5, on voit que les pièces constituant les différentes butées 113, 119, 120 et 121 et leurs talons 114, 115, 116, 117 soudés aux extrémités sont strictement limitées et ne recouvrent pas la plaquette 80 entièrement, ceci afin de limiter le plus possible l'introduction dans la grille d'un matériau absorbant de façon importante les neutrons. Par ailleurs, les mêmes remarques sur l'équilibrage des pressions de part et d'autre et l'absence de tout couple de flexion ainsi que de tout crevé dans la plaquette sont à retenir parmi les avantages de ce mode de réalisation.

En se référant maintenant à la fig. 6, on décrira enfin la façon dont est équipée la plaquette 80 d'une cellule 130 dans laquelle coulisse un tube guide 131. De tels tubes guides sont enfilés à frottement doux dans un manchon 132 comportant au niveau de ses contacts avec chacune des parois telles que 80 une fenêtre 133. Une butée rigide 134 est fixée sur la face de la paroi 80 opposée au tube guide 131 à l'aide d'un double sertissage 135 au travers de fentes 136 et 137 réalisées dans la paroi 80.

Dans le cas de cette application préférentielle de l'invention, chacun des crayons combustibles est donc maintenu à l'intérieur de chacune des cellules par deux ressorts comportant chacun deux faces d'appui et par deux jeux de butées rigides disposées approximativement en face des surfaces d'appui des ressorts. Le crayon est donc en contact avec les éléments de maintien au niveau d'au moins huit zones différentes pour chacune des cellules. Ceci procure un encastrement semirigide permettant d'éviter des déviations angulaires importantes des crayons par rapport à la direction verticale.

On voit donc que les principaux avantages de l'invention sont de permettre un encastrement semirigide efficace des crayons combustibles à l'intérieur des cellules de la grille entretoise sans exercer sur ces crayons des pressions importantes qui pourraient provoquer une destruction de la gaine du crayon, de réduire le nombre d'éléments rapportés en matériau absorbant les neutrons tout en permettant un maintien identique de tous les crayons malgré la présence des tubes guides. Dans un assemblage ayant un nombre impair de cellules sur chacun des côtés de la grille, l'invention permet un montage simple des éléments de maintien transversal des crayons combustibles sur la grille, ces éléments de maintien ne répercutant pas sur les plaquettes de la grille l'ensemble des efforts transversaux exercés par les crayons combustibles.

Mais l'invention ne se limite pas aux modes de réalisation qui viennent d'être décrits; c'est ainsi qu'on peut réaliser des formes de plaquettes différentes de celles qui ont été décrites.

On peut également rapporter des pièces en matériau identique au matériau des plaquettes soudées aux emplacements voulus. On pourrait également utiliser des rivets fixés sur les plaquettes dont les têtes en saillie à l'intérieur des cellules constitueraient des butées rigides.

On peut de même utiliser pour les ressorts doubles ou les ressorts simples des formes différentes de celles qui ont été décrites. Ces ressorts peuvent en particulier avoir un nombre de points d'appui quelconque destinés à venir en contact avec les crayons combustibles le long d'une génératrice de ces crayons qui sont en contact par l'intermédiaire de la génératrice diamétralement opposée avec des butées rigides en nombre égal ou en nombre différent.

Dans tous les exemples de réalisation de la présente invention, il est judicieux de choisir les matériaux constitutifs des grilles pour réduire au strict minimum l'absorption des neutrons. A cet effet, par exemple, on constitue le plus souvent les plaquettes en un alliage à base de zirconium tel que le zircaloy transparent aux neutrons, et les seuls éléments de maintien rapportés en un alliage à base de nickel tel que l'inconel ou le nimonic à haute résistance mécanique.

Enfin, la grille entretoise suivant l'invention, est applicable quel que soit le nombre de crayons combustibles dans le réseau compatible avec les revendications.

**Revendications**

1. Grille entretoise d'un assemblage combustible de réacteur nucléaire a eau légère sous pression constituée par des plaquettes entrecroisées (19, 80) suivant un réseau à mailles carrées dans les cellules (7) de laquelle passent les crayons combustibles (8) pour leur maintien transversal, ces crayons constituant en faisceau où certains crayons sont remplacés par des tubes guides (10) assurant d'une part la tenue mécanique de l'assemblage et, d'autre part, le guidage des crayons de contrôle de la réactivité, les plaquettes qui constituent les parois des cellules portant des éléments de maintien des crayons combustibles en saillie vers l'intérieur des cellules et de deux types, à savoir d'une part des butées rigides (13, 14, 102, 103, 104) et d'autre part des ressorts (12) susceptibles d'exercer des forces transversales sur les crayons combustibles, rapportés sur la grille et disposés autour des plaquettes de façon que chacune des faces de chaque cellule renfermant un crayon porte un élément de type différent de celui porté par la face opposée, caractérisée par le fait qu'elle comporte:

– sur la plus grande partie des parois équipées de ressorts, des ressorts doubles (12, 81, 82) comportant deux parties actives de part et d'autre de la paroi sur laquelle est placé le ressort double, permettant l'action symétrique de ce ressort sur deux crayons différents à l'intérieur de deux cellules adjacentes,

– sur les autres parois équipées de ressorts et/ou de butées rigides, des ressorts simples (16, 100, 101) comportant une seule partie active disposée dans l'une des deux cellules séparées par la paroi sur laquelle est placé le ressort qui est solidaire de butées rigides (102, 103, 104) entrant en contact avec le crayon combustible traversant la cellule située de l'autre côté de ladite paroi, les dites butées rigides (102, 103, 104) étant constituées par des pièces rapportées,

– sur les parois de cellules équipées d'un côté par des ressorts simples et de l'autre côté par des butées rigides, un ressort à deux saillies (100, 101) et trois butées rigides rapportées (102, 103, 104) et fixées à la paroi grâce à deux talons d'extrémité (86, 88) soudés à une plaque coulissante médiane (105) également soudée, logés chacun dans l'une des trois découpes rectangulaires (95, 97, 99) pratiquées en alignement sur la paroi et à deux orifices (96, 98) d'encastrement semi-rigide disposés au voisinage des talons, de façon que l'équilibrage des forces de poussée transversales s'exerçant de chaque côté de la paroi ait lieu directement par l'intermédiaire des talons d'extrémité et de la plaque coulissante médiane sans sollicitation de la paroi (80) en flexion, l'équilibrage des poussées longitudinales sur les deux saillies (100, 101) s'effectuant par glissement de la plaque coulissante médiane montée à cet effet avec un jeu longitudinal dans sa découpe, et la fixation des talons d'extrémité dans leur découpe respective étant obtenue à l'aide de rebords pliés des talons enserrant la paroi.

2. Grille entretoise selon la revendication 1, caractérisée en ce que les parois (80) de cellules équipées de butées rigides sur leurs deux faces, comportent une paire (118, 119, 120, 121) de butées rigides dos à dos à chaque extrémité, chaque butée rigide étant de forme ovoïde obtenue par formage à froid, chaque paire de butées rigides étant rapportée et fixée à la paroi par l'intermédiaire de deux talons soudés (114, 115, 116, 117) monté chacun avec un jeu longitudinal dans une découpe rectangulaire de la paroi (110, 111) à laquelle ils sont fixés par des rebords pliés enserrant la plaque.

3. Grille entretoise selon la revendication 1, caractérisée en ce que les parois de cellules équipées de ressorts doubles (81, 82) ont deux paires de ressorts (81, 82) de chaque côté de la paroi (80) constituées de deux rubans continus soudés l'un à l'autre en trois zones à travers trois découpes rectangulaires (83, 84, 85) alignées dans la paroi, à savoir deux zones extrêmes ou talons (86, 88) fixés par des bords repliés à la paroi et une zone centrale ou plaque coulissante médiane (87) montée avec un jeu longitudinal dans la découpe correspondante (84).

4. Grille entretoise selon la revendication 1, caractérisée en ce que la paroi externe (80) d'une cellule contenant un tube guide (131) est équipée d'une butée rigide rapportée (134), formée dans un ruban serti (135) à ses deux extrémités dans une fente (136, 137) pratiquée à cet effet dans ladite paroi (80).

5. Grille entretoise selon l'une quelconque des revendications 1 à 4, caractérisée en ce que, pour favoriser le guidage des plaquettes formant les parois des cellules lors de l'assemblage, lesdites plaquettes sont munis de crevés (26) possédant un profil chanfreiné dans le sens de l'introduction desdites plaquettes.

**Patentansprüche**

1. Abstandsgitter für Brennstoffbündel eines Leichtdruckwasserreaktors, bestehend aus Platten (19, 80), die entsprechend einem Gitter mit rechteckigen Maschen gekreuzt sind, in dessen Waben (7) die Brennstäbe (8) verlaufen, um sie in Querrichtung festzuhalten, wobei diese Stäbe ein Bündel bilden, in welchem einige Stäbe durch Führungsröhren (10) ersetzt sind, die einerseits die mechanische Festigkeit des Bündels und andererseits die Führung der Steuerstäbe für die Reaktion sicherstellen, wobei die Platten, die die Wände der Waben bilden, Halteelemente für die Brennstoffstäbe tragen, die in den Innenraum der Waben vorstehen und zweierlei Art sind, nämlich einesteils steife Anschläge (13, 14, 102, 103, 104) und anderenteils Federn (12), die dazu eingerichtet sind, Querkräfte auf die auf dem Gitter abgestützten Brennstäbe auszuüben, und die um die Platten derart angeordnet sind, dass jede der Seiten einer jeden Wabe, die einen Stab aufnimmt, ein Element anderer Art als das trägt, das von der gegenüberliegenden Seite getragen wird, dadurch gekennzeichnet, dass das Gitter enthält:

– auf dem grössten Teil der mit den Federn versehenen Wände Doppelfedern (12, 81, 82), die zwei aktive Abschnitte beiderseits der Wand aufweisen, auf der die Doppelfeder angeordnet ist, eine symmetrische Wirkung dieser Feder auf zwei verschiedene Stäbe im Innern von zwei benachbarten Waben ermöglichend,

– auf den anderen Wänden, die mit Federn und/oder steifen Anschlägen versehen sind, einfache Federn (16, 100, 101), die einen einzigen aktiven Abschnitt aufweisen, der in einer der zwei von der Wand getrennten Waben befindlich ist, auf der die Feder angeordnet ist, die mit steifen Anschlägen (102, 103, 104) verbunden ist, die in Berührung mit dem Brennstab gelangen, der die Wabe auf der anderen Seite der genannten Wand durchquert, wobei die genannten steifen Anschläge (102, 103, 104) von zusammengesetzten Teilen gebildet sind,

– auf den Wabenwänden, die auf der einen Seite mit einfachen Federn und auf der anderen Seite mit steifen Anschlägen versehen sind, eine Feder mit zwei Vorsprüngen (100, 101) und drei mehrteilige steife Anschläge (102, 103, 104), die an der Wand mittels zweier angeschweisster Endfahnen (86, 88) befestigt sind, und mit einer ebenfalls geschweissten mittleren Gleitplatte (105), die jeweils in einem von drei rechteckigen Ausschnitten (95, 97, 99) liegt, die in einer Linie in der Wand ausgebildet sind, und mit zwei halbsteifen Aufnahmeöffnungen (96, 98), die benachbart der Fahnen derart angeordnet sind, dass ein Ausgleich von Querkräften, die von jeder Seite auf die Wand einwirken, direkt mittels der Endfahnen und der mittleren Gleitplatte stattfindet, ohne die Wand (80) einer Durchbiegung zu unterwerfen, wobei ein Ausgleich des Längsschubes auf die zwei Vorsprünge (100, 102) durch Verschiebung der mittleren Gleitplatte stattfindet, die zu diesem Zweck in ihrem Ausschnitt mit Längsspiel gehalten ist, und wobei die Befestigung der Endfahnen in ihrem jeweiligen Ausschnitt mit Hilfe von umgebogenen Rändern der Fahnen erzielt ist, die an der Wand verspannt sind.

2. Abstandsgitter nach Anspruch 1, dadurch gekennzeichnet, dass die Wände (80) der Waben, die auf ihren beiden Seiten mit steifen Anschlägen versehen sind, ein Paar (118, 119, 120, 121) steife Anschläge Rücken an Rücken an jedem Ende aufweisen, wobei jeder steife Anschlag ovale Form hat, die durch Kaltverformung erhalten ist, wobei jedes Paar steifer Anschläge mehrteilig ist und an der Wand mittels zweier geschweisster Fahnen (114, 115, 116, 117) befestigt ist, die jeweils mit Längsspiel in einem rechteckigen Ausschnitt der Wand (110, 111), an der sie befestigt sind, von umgebogenen Rändern gehalten sind, die an der Platte verspannt sind.

3. Abstandsgitter nach Anspruch 1, dadurch gekennzeichnet, dass die Wände der Waben, die mit Doppelfedern (81, 82) versehen sind, zwei Federpaare (81, 82) auf jeder Seite der Wand (80) haben, die von zwei Streifen gebildet sind, die miteinander in drei Zonen quer durch drei rechteckige Ausschnitte (83, 84, 85) verschweisst sind, die in einer Linie in der Wand ausgebildet sind, nämlich an zwei äusseren Zonen, wo die Fahnen (86, 88) durch umgebogene Ränder an der Wand befestigt sind, und an einer mittleren Zone, wo die mittlere Gleitplatte (87) mit Längsspiel in dem entsprechenden Ausschnitt (84) gehalten ist.

4. Abstandsgitter nach Anspruch 1, dadurch gekennzeichnet, dass die äussere Wand (80) einer Wabe, die eine Führungsröhre (131) enthält, mit einem mehrteiligen steifen Anschlag (134) versehen ist, der von einem Streifen (135) gebildet ist, der an seinen beiden Enden in einen Schlitz (136, 137) eingefalzt ist, der zu diesem Zweck in der genannten Wand (80) ausgebildet ist.

5. Abstandsgitter nach einem der Ansprüche 1 bis 4, dadurch gekennzeichnet, dass zur Begünstigung der Führung der Platten, die nach dem Zusammenbau die Wände der Waben bilden, die Platten mit Buckeln (26) versehen sind, die ein schräges Profil in Einführungsrichtung der genannten Platten aufweisen.

**Claims**

1. Spacer grid for a fuel assembly for a pressurized light water nuclear reactor, consisting of intercrossing plates (19, 80) in a square-mesh lattice into whose cells (7) the fuel rods (8) pass for transverse support, said rods constituting a bundle in which certain rods are replaced by guide tubes (10) which on the one hand ensure the mechanical stability of the assembly and on the other hand guide the reactivity control rods, the plates which constitute the walls of the cells carrying fuel rod support members which project towards the interior of the cells and which are of two types, namely firstly rigid stops (13, 14, 102, 103, 104) and secondly springs (12) adapted to apply transverse forces to the fuel rods, said members being attached to the grid and disposed around the plates in such a manner that each face of each cell enclosing a rod carries a member of a different type from that carried by the opposite face, characterized in that:
– on the majority of the walls equipped with springs it is provided with double springs (12, 81, 82) consisting of two operative parts on each side of the wall on which the double spring is placed, and permitting the symmetrical action of said spring on two different rods inside two adjacent cells;
– on the other walls equipped with springs and/or rigid stops it is provided with single springs (16, 100, 101) comprising a single operative part disposed in one of the two cells separated by the wall on which is placed the spring which is fastened to rigid stops (102, 103, 104) coming into contact with the fuel rod passing through the cell situated on the other side of said wall, said rigid stops (102, 103, 104) consisting of attached members,
– on the walls of cells equipped on one side with single springs and on the other side with rigid stops, it is provided with a spring having two projections (100, 101) and three attached rigid stops (102, 103, 104) fixed to the wall by means of two welded end heels (86, 88), and to a likewise welded middle sliding plate (105), each of said heels being received in one of the three rectangular cutouts (95, 97, 99) formed in alignment on the wall, and to two apertures (96, 98) for semi-rigid embedding, which are disposed near the heels, in such a manner that the balancing of the transversal thrust forces exerted on each side of the wall will be effected directly by means of the end heels and of the middle sliding plate without subjecting the wall (80) to bending stresses, the balancing of longitudinal thrusts on the two projections (100, 101) being effected by sliding the middle sliding plate mounted for that purpose with longitudinal play in its cutout, and the fastening of the end heels in their respective cutouts being achieved with the aid of folded rims provided on the heels and gripping the wall.

2. Spacer grid according to claim 1, characterized in that the walls (80) of cells equipped with rigid stops on both faces comprise a pair (118, 119, 120, 121) of rigid stops disposed back to back at each end, each rigid stop being given an ovoid shape by cold forming, each pair of rigid stops being attached and fixed to the wall by means of two welded heels (114, 115, 116, 117), each mounted with longitudinal clearance in a rectangular cutout (110, 111) in the wall to which they are fixed by folded rims gripping the plate.

3. Spacer grid according to claim 1, characterized in that the walls of cells equipped with double springs (81, 82) have two pairs of springs (81, 82) on each side of the wall (80), which are composed of two continuous strips welded to one another in three zones through three rectangular cutouts (83, 84, 85) aligned in the wall, namely two end zones or heels (86, 88) fixed by folded rims to the wall and a central zone or middle sliding plate (87) mounted with longitudinal clearance in the corresponding cutout (84).

4. Spacer grid according to claim 1, characterized in that the outer wall (80) of a cell containing a guide tube (131) is equipped with an attached rigid stop (134) formed in a strip crimped (135) at both ends in a slot (136, 137) formed for that purpose in said wall (80).

5. Spacer grid according to any one of claims 1 to 4, characterized in that in order to assist the guiding of the plates forming the cell walls during their assembly said plates are provided with slashes (26) having a chamfered profile in the direction of introduction of said plates.

FIG.1

FIG.3a

FIG.3b

# FIG.4a

# FIG.4b

0133712

FIG. 2ₐ

FIG. 2_b

15

# FIG.5a

# FIG.5b

FIG. 3c

FIG. 4c

FIG. 5c

FIG. 6